# EUROPEAN PATENT SPECIFICATION

(11) **EP 1 442 993 B1**
(45) Date of publication and mention of the grant of the patent: **08.11.2006**
(21) Application number: 04000992.0
(22) Date of filing: 19.01.2004
(51) Int. Cl.: B65D 39/00, B65D 41/00, B65D 81/26, B65D 81/28, B65D 23/02, B65D 25/14

(54) **Acetaldehyde scavening by addition of active scavengers to bottle closures**
Flaschenverschlüsse mit acetaldehydaufnehmenden Komponenten
Bouchons de bouteilles comprenant des agents absorbant l'acétaldéhyde

(30) Priority: 29.01.2003 US 353411
(43) Date of publication of application: 04.08.2004
(60) Divisional application: 06016967.9
(73) Proprietor: EASTMAN CHEMICAL COMPANY, Kingsport, TN 37660-5075 (US)
(72) Inventor: Howell, Earl Edmonson, Jr, Kingsport, TN 37662 (US); Ponasik, James Allen, Jr., Kingsport, TN 37660 (US)
(74) Representative: Wibbelmann, Jobst

(56) References cited:
- EP-A- 0 969 047
- WO-A-01/30899
- WO-A-94/29378
- US-B1- 6 274 212

## Description

### 1. Field of the Invention

The invention pertains to compositions containing acetaldehyde scavengers in polyethylene terephthalate packaging, and more particularly to polyethylene terephthalate packaging closures containing acetaldehyde scavengers.

### 2. Background of the Invention

The polyester container market for still and carbonated water has experienced exceptional growth over the past several years. The material of choice for these markets is increasingly polyethylene terephthalate (PET), which combines excellent mechanical and optical properties. Unfortunately, PET contains a measurable level of residual acetaldehyde (AA), which is produced by thermal degradation of the polymer during synthesis and processing. When polyesters containing ethylene glycol as one of the starting materials are melted, a decomposition reaction occurs which produces acetaldehyde (AA). The amount of acetaldehyde formed is a function of the temperature and the time that the polymer is held in the melt, the polymerization catalyst and stabilizers used in the manufacturing process, the molecular weight of the polymer, the end group concentration of the polymer, the process used to form the finished package and the variables of that process such as temperature, shear rate, residence time, etc. A portion of the AA produced remains within the quenched polymer/package and can migrate from and through the container wall and enter the package's contents. Although AA is a naturally occurring flavorant which is used in number of food and beverage items, consumers may find the flavor undesirable in some foods and beverages.

For example, the fruity flavor that AA can impart may be considered undesirable in a bottled water where the consumer expects a "clean" taste. The taste threshold for AA in water is in the 10 to 20 parts per billion range, requiring bottle perform AA concentrations of 1 to 2 parts per million. Over time, the residual AA leaches into the water, imparting an undesirable taste and smell to the product. It is not surprising, therefore, that there has been a considerable amount of work done to produce PET with lower levels of AA.

Attempts at controlling the generation of AA in PET packaging have focused on manufacturing process modifications impacting the melt phase polymerization of polyethylene terephthalate or the injection molding stage for the manufacture of preforms suitable for blow molding or thermoforming, or on the modification of the polyester polymer backbone, or on modifying the composition through the addition of a variety of AA scavenging additives to the polyester composition by blending a scavenging additive with the resin in a melt or by pellet/pellet blending at injection molding to scavenge the AA from the polymer before it can migrate into the product.

These efforts have met with some degree of success, but problems with some AA generation persist. For example, in spite of formulating a polyester polymer backbone which generates low AA in the melt phase, and the addition of suitable AA scavengers in the melt phase polymerization step or in the injection molding stage, and the use of process controls in the melt phase polymerization step adapted to minimize the generation of AA, the process conditions best adapted to reduce the cycle time for the manufacture of preforms can also lead to the formation of small amounts of additional acetaldehyde, and residual amounts of acetaldehyde may not be scavenged by the addition of scavengers to the polymer. The additional acetaldehyde formed and the residual acetaldehyde in the walls of the container can, over time, migrate out of the polymer into the vapor space above the contents contained in the package. Small amounts of acetaldehyde in the vapor space, e.g. in the range of 5 to 250 ppb can affect the taste of some beverages, including water. AA scavenger additive levels in the package resin may not be sufficient to effectively eliminate all acetaldehyde in the resin, resulting in small amounts of acetaldehyde migrating into the container's vapor space and it's contents over time.

Thus, there remains a need to further reduce the level of acetaldehyde in packaging. Because acetaldehyde migrating into the package will establish an equilibrium concentration distribution between the package's contents and the vapor space above the liquid, scavenging acetaldehyde from the vapor space offers an opportunity to remove acetaldehyde from the container after manufacture of the package and subsequent filling. Scavenging acetaldehyde from the container's vapor space will immediately result in a re-equilibration of the acetaldehyde concentration between the package's contents and the container's vapor space. In this manner, nearly all of the acetaldehyde that migrates from the walls of the container into the package's vapor space or its contents may eventually be removed.

### 3. Brief Summary of the invention

We have discovered that the generation of AA from PET resin may be controlled not only by process modifications to the melt and injection molding stages, and by the addition of AA scavenging additives to the polymer ultimately forming the package, but that the level of acetaldehyde in a package may also be controlled by reducing AA levels in the vapor spaces of the formed package as the AA migrates from the walls of the PET container.

Accordingly, there is provided a threaded closure for a polyethylene terephthalate container for holding fluids, said closure comprising a polymer and a acetaldehyde scavenger effective to react with acetaldehyde under closure conditions. Closure conditions are conditions effective to seal the closure against the body of the container.

There is also provided a polyethylene terephthalate package comprising a polyethylene terephthalate container for fluids and a threaded closure, said closure comprising a polymer and a compound effective to react with acetaldehyde under closure conditions in an amount ranging from 25 ppm to 10 wt.%.

There is also provided a closure for a polyethylene terephthalate container, said closure comprising a liner having a vapor surface disposed in direct contact with a vapor space above a fluid in the container, said liner comprising a compound effective to react with acetaldehyde under closure conditions comprising a polyoxyalkylene amine; a polyamidoamine; a polyamide; a polyesteramide; anthranilic acid; anthranilamide; salicyclamide; salicylanilide; o-phenylenediamine; 3,4-diaminobenzoic acid; o-mercaptobenzamide; 4,5-dihydroxy-2,7-naphthalenedisulfonic acid; biuret; 2-amino-2-methyl-1,3-propanediol; aniline; 1-amino-2-indole; a thiol containing an active sulfur hydrogen atom; activated carbon; alumina; silica; amine functionalized silica; talc; zeolites; or a polyfunctional organic species containing both a primary, secondary or tertiary amine group and a carboxylic acid, phenolic, amide, ester, or thiol group, at least one of which is capable of reacting onto the backbone of the polymer and one of which is capable of reacting with acetaldehyde.

There is further provided a package comprising a polyethylene terephthalate bottle containing a fluid, a closure, and a vapor space in contact with the closure and above the fluid, said closure comprising a compound effective to react with acetaldehyde under closure conditions.

There is also provided a package comprising a polyethylene terephthalate bottle containing a fluid, a vapor space above the fluid, a closure having an inner surface facing the vapor space, and a liner disposed on the inner surface of the closure, said liner comprising a compound effective to react with acetaldehyde under closure conditions.

The invention also comprises a process for reducing acetaldehyde levels in a vapor space located between a closure and contents contained within a polyethylene terephthalate container, comprising sealing the polyethylene terephthalate container with a closure comprising a compound effective to react with the acetaldehyde in the vapor space.

In a further aspect of the invention, there is provided a closure comprising a polymer and an acetaldehyde scavenger comprising polyamine, polyamides, or polyamidoamine compounds having an active amine hydrogen, compounds having an active sulfur hydrogen, compounds having an active hydroxyl hydrogen, carbon, silica, alumina, zeolites, or talc. There is also provided a liner comprising these materials, and bottles containing a fluid, a vapor space above the fluid, and a closure comprising these compounds within the plastic closure polymer, as a coating, or in a liner.

### 4. Detailed Description of the Invention

This invention details a robust method for scavenging aldehydes, such as acetaldehyde, from the vapor space of the packaged food or beverage using a process that is independent of the resin end group population, the processing conditions used in the fabrication of the main body of the package and which does not impact the appearance or performance of the polyester container.

Most polyester packaging solutions involve two primary components: the sealable container body, and a closure, or cap. The closure is typically produced from a polymer other than PET; although it need not be in all cases. Generally, the closure composition is a thermoplastic polymer, and is selected from among polyethylene, polypropylene, poly (vinyl chloride) polymers, copolymers of ethylene and a vinyl ester, such as polyethylene vinyl acetate ("EVA"), ethylene vinyl alcohol, polyester polymers and copolymers, in particular polyethylene terephthalate, and olefin homopolymer and copolymers, polyurethane, polycarbonates, polyacrylates, polyethers, polyketones, polyarylates and the like. Most closures are plastic screw threaded caps, and most of these are injection molded. The closure must be capable of providing a sealing contact with the body of the container to prevent the vapor overhead from escaping. Providing a sealed package is especially important to preserve carbonation, and to keep the contents sanitary.

The container may be provided in the form of different shaped articles. Suitable containers include rigid plastic containers such as juice containers, carbonated soft drink containers, water bottles and any other type of container for fluids; sealable thermoformed trays, and flexible sealable bags. The shape of the packaging and the nature of the packaging material are not limited so the material used in the body of the container may be a type of plastic which generates or allows the migration of an aldehyde out of the plastic, and the packaging is adapted to be sealed with a closure.

Preferably, the container comprises a polyester, and more preferably a polyethylene terephthalate composition (PET) or polyethylene naphthalate composition (PEN). Copolyesters and blends of PET and PEN can also be used. Multi-layer containers comprised of at least one PET layer can also be used.

Suitable polyesters are generally known in the art and may be formed from aromatic dicarboxylic acids, esters of dicarboxylic acids, anhydrides of dicarboxylic esters, glycols, and mixtures thereof. Suitable partially aromatic polyesters are formed from repeat units comprising terephthalic acid, dimethyl terephthalate; isophthalic acid, dimethyl isophthalate, dimethyl-2,6-naphthalenedicarboxylate, 2,6-naphthalenedicarboxylic acid, 1,2-, 1,3- and 1,4-phenylene dioxydiacetic acid, ethylene glycol, diethylene glycol, 1,4-cyclohexanedimethanol, 1,4-butanediol, and mixtures thereof. As used herein, the term "repeat units from dicarboxylic acid" include repeat units from the esters and anhydrides of said dicarboxylic acids.

Preferred polyesters comprise repeat units comprising terephthalic acid, dimethyl terephthalate, isophthalic acid, dimethyl isophthalate, dimethyl-2,6-naphthalenedicarboxylate and mixtures thereof. More preferably the polyesters used in the body of the container comprise at least about 50 mol% and most preferably at least about 70 mol% and most preferably at least about 85 mole% terephthalic acid in the dicarboxylic acid component. In the most preferred embodiment, PET polyesters comprise at least about 90 mole% terephthalic acid or dimethyl terephthalate and at least about 90 mole% ethylene glycol residues

The dicarboxylic acid component of the polyester may optionally be modified with up to about 50 mole percent of one or more different dicarboxylic acids other than terephthalic acid or suitable synthetic equivalents such as dimethyl terephthalate. Such additional dicarboxylic acids include aromatic dicarboxylic acids preferably having 8 to 14 carbon atoms, aliphatic dicarboxylic acids preferably having 4 to 12 carbon atoms, or cycloaliphatic dicarboxylic acids preferably having 8 to 12 carbon atoms. Examples of dicarboxylic acids to be included with terephthalic acid are: phthalic acid, isophthalic acid, naphthalenedicarboxylic acid (including, but not limited to the 2,6-isomer), cyclohexanedicarboxylic acid, cyclohexanediacetic acid, diphenyl-4,4'-dicarboxylic acid, succinic acid, glutaric acid, adipic acid, azelaic acid, sebacic acid, and the like. Examples of dicarboxylic acids to be included with naphthalene- 2,6-dicarboxylic acid are phthalic acid, terephthalic acid, isophthalic acid, other isomers of naphthalenedicarboxylic acid, cyclohexanedicarboxylic acid, cyclohexanediacetic acid, diphenyl-4,4'-dicarboxylic acid, succinic acid, glutaric acid, adipic acid, azelaic acid, sebacic acid, and the like. Polyesters may be prepared from two or more of the above dicarboxylic acids.

It should be understood that use of the corresponding acid anhydrides, esters, and acid chlorides of these acids is included in the term "dicarboxylic acid".

In addition, the polyester component may optionally be modified with up to about 15 mole percent, of one or more different diols other than ethylene glycol. Such additional diols include cycloaliphatic diols preferably having 6 to 20 carbon atoms or aliphatic diols preferably having 3 to 20 carbon atoms. Examples of such diols to be included with ethylene glycol are: diethylene glycol, triethylene glycol, 1,4-cyclohexanedimethanol, propane-1,3-diol, butane-1,2-diol, pentane-1,5-diol, hexane-1,6-diol, 3-methylpentanediol-(2,4), 2-methylpentanediol-(1,4), 2,2,4-trimethylpentane-diol-(1,3), 2-ethylhexanediol- (1,3), 2,2-diethylpropane-diol-(1,3), hexanediol-(1,3), 1,4-di-(hydroxyethoxy)-benzene, 2,2-bis-(4-hydroxycyclohexyl)-propane, 2,4-dihydroxy-1,1,3,3-tetramethyl- cyclobutane, 2,2-bis-(3-hydroxyethoxyphenyl)-propane, and 2,2-bis-(4-hydroxypropoxyphenyl)-propane. Polyesters may be prepared from two or more of the above diols.

The polyethylene terephthalate resin may also contain small amounts of trifunctional or tetrafunctional comonomers such as trimellitic anhydride, trimethylolpropane, pyromellitic dianhydride, pentaerythritol, and other polyester forming polyacids or polyols generally known in the art.

Polyethylene terephthalate based polyesters of the present invention can be prepared by conventional polycondensation procedures well-known in the art. Such processes include direct condensation of the dicarboxylic acid(s) with the diol(s) or by ester interchange using a dialkyl dicarboxylate. For example, a dialkyl terephthalate such as dimethyl terephthalate is ester interchanged with the diol(s) at elevated temperatures in the presence of a catalyst. The polyesters may also be subjected to solid state polymerization methods. PEN polyesters may also be prepared by well known polycondensation procedures.

The polyesters useful as the polymer for the container body have an ItV of about 0.55 to about 1.5 dL/g, preferably from 0.65 to about 1.1 dL/g, when measured as a solution of polymer dissolved in a mixture comprised of 60 % by weight phenol and 40 % by weight of 1,1,2,2-tetrachloroethane.

The acetaldehyde scavenger can be blended into the closure material of the container, it can be incorporated into the liner material, it can be deposited as a coating onto the inner surface of the closure, or it can be laminated onto the inner surface of the closure facing the vapor space. If desired, the scavenger may also be placed between the lid and the liner as a separate layer. In the event that the scavenger layer is disposed between the inner surface of the closure and a liner, the liner in this case should be permeable to acetaldehyde or any other aldehyde species to be scavenged. Otherwise, there are no constraints placed on the nature of the liner material used.

The liner is typically used to provide a tight seal against the container body, preventing the exchange of gases to and from the contents of the package. Many of the liners are self weldable with the application of heat at low temperatures. The liner also may contain antiblock and antifog additives, as well as oxygen scavengers. A wide variety of materials can be used as a liner. Examples of useful polymers for liners can be selected from the among suitable materials used to make the closure, that is, thermoplastic polymers such as ethylene vinylacetate (EVA) having a vinyl acetate/ethylene weight ratio of 5-20%:1 %, PVC, polyurethane, PET, and polyolefins such as polyethylene, including LDPE, branched or unbranched, having a density ranging from about 0.915 - 0.925, LLDPE having a density ranging from 0.920 to 0. 924, and very low density polyethylene having density below 0. 910 where sealability is desired, or HDPE having a density ranging from about _0.94 to_0.96 g/cc where sealability is not critical parameter; homopolymers of polypropylene or copolymers of polypropylene with ethylene having an ethylene content of 3-10% by weight; acrylates and methacrylate polymers from compounds such as ethylene (meth)acrylic acid, ethylene acrylic acid, and ethylene n-butyl acrylate, and the salts thereof. It is preferred to use a polymer material which does not generate acetaldehydes over time in order to minimize the amount of scavenger needed in the liner or closure.

In one embodiment, there is provided a liner in contact with the closure for a polyethylene terephthalate package. One surface of the liner contacts the inner surface of the closure, while the other surface of the liner, the vapor surface, is disposed and faces the vapor space above a fluid in the container. The liner material containing the scavenging compound is in direct contact with the vapor space on its vapor surface, meaning that in this embodiment, the acetaldehyde does not need to penetrate an intermediate layer to contact the liner containing the scavenger because the liner contacts the vapor space directly without the presence of a polymer layer or other barrier between the vapor space and the liner.

In this embodiment, the scavenger is incorporated into the liner polymer or coated on the liner polymer, preferably incorporated into the liner polymer. The presence of the scavenger in the liner may be due to blending the scavenger with the liner polymer or by pre-reacting the scavenger with the liner polymer or by co-polymerizing the scavenger with the liner polymer during polymerization of the liner polymer such that the scavenger is reacted into the backbone of the polymer or grafted onto the liner polymer backbone. In this embodiment, the scavenger reacts with acetaldehyde contained in a vapor space under closure conditions. Closure conditions are conditions effective to seal the closure against the body of the container.

The preferred package is a bottle, and in particular a polyethylene terephthalate bottle containing a fluid such as water.

There is provided a process for reducing acetaldehyde levels in a vapor space located between a closure sealed to a polyethylene terephthalate container and the contents contained within a polyethylene terephthalate container, comprising contacting a) a vapor comprising acetaldehyde in the vapor space with b) a closure comprising a compound effective for scavenging acetaldehyde, and continuously scavenging acetaldehyde from the vapor at a temperature less 50°C, preferably less than 40°C. The process of the invention may be used to scavenge acetaldehyde at 25°C or less and even 15°C or less. The temperature values are measured by the temperature to which the vapor space is subjected for at least 0.5 hours, which is about the time necessary to equilibrate the temperature of the package contents with ambient surroundings. Since the temperature values are measured by the applied temperature, the temperature values are independent of the pressure generated inside the sealed package. By a sealed closure is meant the conventional seal applied to the package for the market into which the package is sold.

This process is unlike conventional scavenging schemes which attempt to capture acetaldehyde in the polymer melt during melt phase manufacture or during injection blow molding as a liquid/gas interaction. In this case, the scavenger compound operates to scavenge acetaldehyde in a solid/gas interaction, wherein the scavenger operates in the solid phase to scavenge acetaldehyde from a gas phase. Moreover, unlike conventional scavenging schemes which capture acetaldehyde at the high temperatures of the melt, e.g. greater than 200°C, the process of the invention provides for acetaldehyde capture at lower temperatures. Since many beverages are refrigerated, the process has the advantage of scavenging at a wide range of lower temperatures, even down to temperatures above the freezing temperatures of the package contents. Finally, the process of the invention provides for the continual scavenging of acetaldehyde. Thus, scavenging will continue for so long as a significant amount of acetaldehyde migrates into the container vapor space or until such time as the closure is unsealed. Acetaldehyde will continuously migrate from the liquid phase into the vapor space because as the acetaldehyde is captured by the scavenger, more acetaldehyde will diffuse into the vapor space, thus providing a continuous process for-scavenging acetaldehyde rather than a one time scavenging as experienced in the melt applications.

In an alternative embodiment, there is provided a polyethylene terephthalate package, a closure, and a vapor space above the fluid and in contact with the closure, where the closure itself contains a compound effective to react with acetaldehyde under closure conditions. In this embodiment, a liner is not needed and the scavenger is incorporated directly into the closure itself.

The process for incorporating the scavenger into the closure or the liner can be any conventional process known for combining two compounds or polymers. Typical processes include dry blending pellets into an extruder or injection molding machine by the addition of the scavenger neat or as a concentrate or in a carrier to a feed of bulk polymer to the extruder. Alternatively, the scavenger can be added neat, as a concentrate, or in a carrier to a suitable reaction vessel used to manufacture the closure or liner resin. If desired, the scavenger can be deposited onto a support such as silica or a zeolite, which is then compounded into a polymer melt used to make the closure or liner.

The invention also comprises a process for reducing acetaldehyde levels in a vapor space located between a closure and contents contained within a polyethylene terephthalate container, comprising sealing the polyethylene terephthalate container with a closure containing a compound effective to react with the acetaldehyde in the vapor space. The scavenger may be blended with the polymer material or may be copolymerized, reacted onto, or grafted onto the polymer backbone.

In addition to scavenging acetaldehyde, many of the scavengers are capable of scavenging other aldehydes or ketones, which would be useful in other applications. Non-limiting examples of other aldehydes and ketones include formaldehyde, propionaldehyde, acrolein, butyraldehyde, benzaldehyde, acetone, cylopentanone, and the like.

Suitable scavenger materials include polyoxyalkylene amines, polyamidoamines, polyamides, polyesteramides, anthranilic acid, anthranilamide, salicyclamide, salicylanilide, o-phenylenediamine, 3,4-diaminobenzoic acid, o-mercaptobenzamide, 4,5-dihydroxy-2,7-naphthalenedisulfonic acid, biuret, 2-amino-2-methyl-1,3-propanediol, aniline, and 1-amino-2-indole, thiols containing an active sulfur hydrogen atom, activated carbon, alumina, silica, silica functionalized with amine groups, talc, and zeolites, polyfunctional organic species containing both a primary, secondary or tertiary amine group and a carboxylic acid, phenolic, amide, ester, or thiol groups, each of which are capable of being reacted into the backbone of the liner material or the closure material, or reacting with acetaldehyde.

The polyoxyalkylene polyamines include diamines and triamines, which may optionally be functionalized with hydroxyl and aminoalcohol groups, having a number average molecular weight ranging form 400 to 6000, preferably from 1,000 to 3,000. Examples include polyoxyethylene diamine, amino group-containing polymers such as amino group-terminated polyethers, for example, aminoethyletherified or aminopropyl-etherified polyethylene glycol and/or polypropylene glycol, and the polyoxyalkylene polyamines known as Jeffamine® amines.

Examples of suitable polyamides include those having a molecular weight suitable for film formation and an It. V of 0.4 dL/g or more. These include poly(m-xylylene adipamide), poly(hexamethylene adipamide), polycaprolactam, poly(hexamethylene isophthalamide), and poly(hexamethylene isophthalamide-co-terephthalamide). Additionally polyamides formed from isophthalic acid, terephthalic acid, cyclohexanedicarboxylic acid, *meta-* or *para*-xylylene diamine, 1,3- or 1,4-cyclohexane(bis)methylamine, aliphatic diacids with 6 to 12 carbon atoms, aliphatic amino acids or lactams with 6 to 12 carbon atoms, aliphatic diamines with 4 to 12 carbon atoms, and other generally known polyamide forming diacids and diamines can be used. The polyamides may also contain small amounts of trifunctional or tetrafunctional comonomers such as trimellitic anhydride, pyromellitic dianhydride, or other polyamide forming polyacids and polyamines known in the art.

Preferred low molecular weight aliphatic polyamides include polycapramide (nylon 6), poly-ω-aminoheptanoic acid (nylon 7), poly-ω-aminonanoic acid (nylon 9), polyundecane-amide (nylon 11), polyaurylactam (nylon 12), polyethylene-adipamide (nylon 2,6), polytetramethylene-adipamide (nylon 4,6), polyhexamethylene-adipamide (nylon 6,6), polyhexamethylene-sebacamide (nylon 6,10), polyhexamethylene-dodecamide (nylon 6,12), polyoctamethylene-adipamide (nylon 8,6), polydecamethylene-adipamide (nylon 10,6), polydodecamethylene-adipamide (nylon 12,6) and polydodecamethylene-sebacamide (nylon 12,8).

The preferred polyamides are low molecular weight partially aromatic polyamides having a number average molecular weight of less than 15,000, more preferably less than 13,000, and most preferably less than 11,000, and low molecular weight aliphatic polyamides having a number average molecular weight of less than 7,000, and combinations thereof. By "partially aromatic polyamide" it is meant that the amide linkage of the partially aromatic polyamide contains at least one aromatic ring and a nonaromatic species. The partially aromatic polyamides have an It.V. of less than 0.85 dUg. Preferably the It.V. of the partially aromatic polyamides is less than 0.75 dUg and the number average molecular weight is less than 13,000. The aliphatic polyamides have an It.V. of less than 1.15 dL/g. Preferably the It.V. of the aliphatic polyamides is less than 0.85 dL/g and the number average molecular weight is less than 6,000. The most preferred polyamide is poly(m-xylylene adipamide) having an inherent viscosity in 60/40 phenol/tetrachloroethane of 0.2 to 0.4 dL/g.

The low molecular weight polyamides are generally prepared by melt phase polymerization from a diacid-diamine complex which may be prepared either in situ or in a separate step. In either method, the diacid and diamine are used as starting materials. Alternatively, an ester form of the diacid may be used, preferably the dimethyl ester. If the ester is used, the reaction must be carried out at a relatively low temperature, generally 80 to 120°C, until the ester is converted to an amide. The mixture is then heated to the polymerization temperature. In the case of polycaprolactam, either caprolactam or 6-aminocaproic acid can be used as a starting material and the polymerization may be catalyzed by the addition of adipic acid/hexamethylene diamine salt which results in a nylon 6/66 copolymer. When the diacid-diamine complex is used, the mixture is heated to melting and stirred until equilibration.

The molecular weight is controlled by the diacid-diamine ratio. An excess of diamine produces a higher concentration of terminal amino groups. If the diacid-diamine complex is prepared in a separate step, excess diamine is added prior to the polymerization. The polymerization can be carried out either at atmospheric pressure or at elevated pressures.

Of the low molecular weight partially aromatic polyamides, the preferred ones include: poly(m-xylylene adipamide), poly(hexamethylene isophthalamide), poly(hexamethylene adipamide-co-isophthalamide), poly(hexamethylene adipamide-co-terephthalamide), and poly(hexamethylene isophthalamide-co-terephthalamide). The most preferred low molecular weight partially aromatic polyamide is poly(m-xylylene adipamide) having a number average molecular weight of about 4,000 to about 7,000 and an inherent viscosity of about 0.3 to about 0.6 dL/g.

Preferred low molecular weight aliphatic polyamides include poly(hexamethylene adipamide) and poly(caprolactam). The most preferred low molecular weight aliphatic polyamide is poly(hexamethylene adipamide) having a number average molecular weight of about 3,000 to about 6,000 and an inherent viscosity of 0.4 to 0.9 dL/g. Low molecular weight partially aromatic polyamides, are preferred over the aliphatic polyamides where clarity and dispersibility are crucial.

In another embodiment, the present invention provides an acetaldehyde scavenger, which contains functionality capable of reacting with the polymer backbone to provide a covalently bound scavenger. This scavenger could be mono or difunctional, providing an end capper or a monomer, respectively. Examples of functional groups used to react the scavenger into the polymer chain include hydroxyl, ester, amide, amine, or any other group capable of reacting with the selected polymer and having at least one unbound group capable of reacting with acetaldehyde. Preferred examples of a scavenger capable of reacting with the polymer backbone are shown in the following representative formulas: 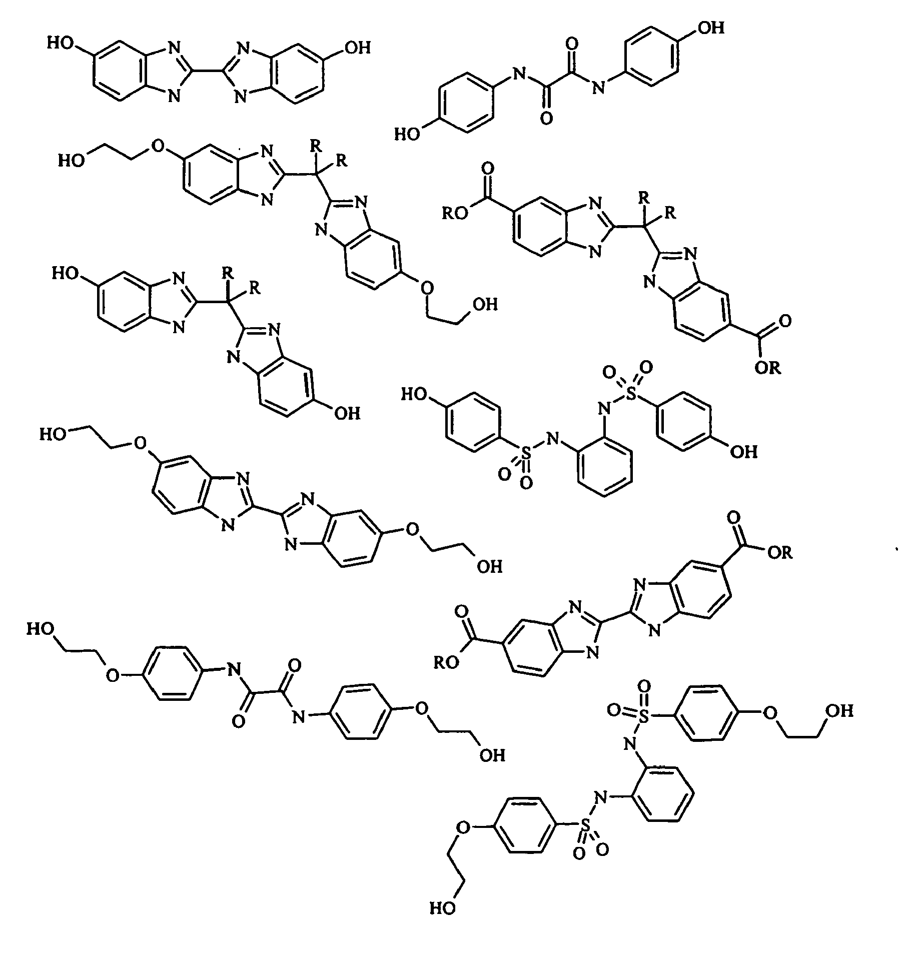 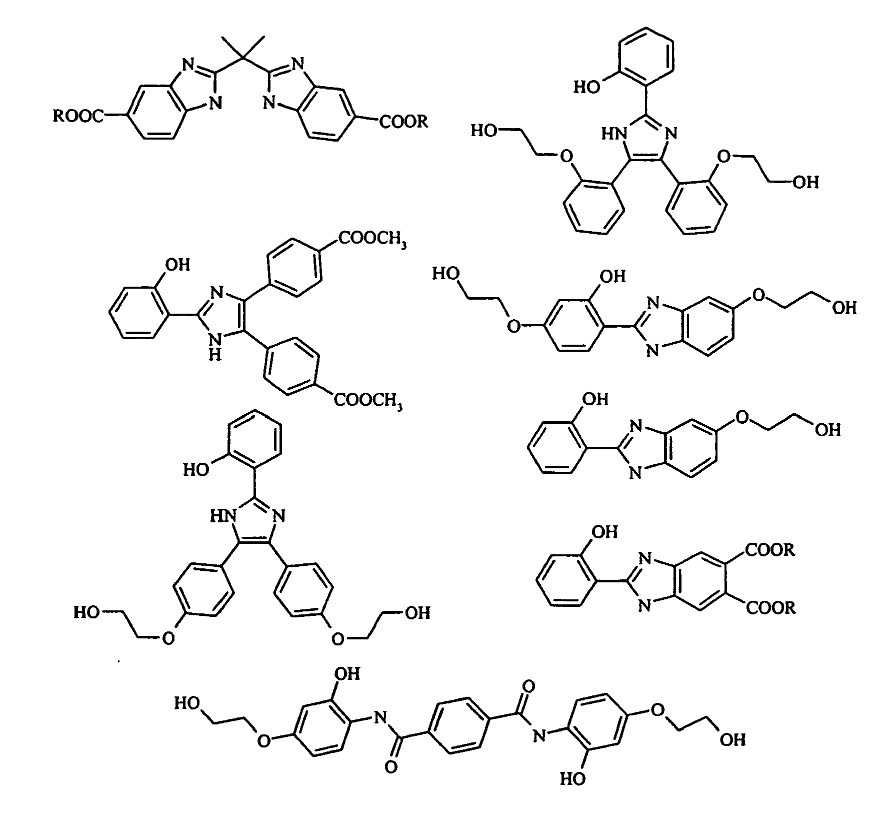 wherein R is independently H, alkyl, aryl, substituted alkyl or heteroaryl.

The level of scavenger selected should be based on the anticipated amount of aldehyde present in the vapor space of the container and generated from the walls of the container. Generally, the minimal level of scavenger selected should be slightly more than one mole of scavenger per mole of acetaldehyde. Higher levels may be required when such factors as mixing of the scavenger in a support, diffusion of the aldehyde through the support and desired rate of scavenging are considered.

Typical amounts of scavenger begin at 25 ppm, more preferred are at least 50 ppm, based on the weight of the polymer used to make either the closure or liner, depending on where the scavenger is incorporated. Usually, no more than 2000 ppm, and in many cases not more than 500 ppm of scavenger are needed to effectively scavenge the acetaldehyde generated from the small residual amount migrating from the walls of the container into the vapor space. Thus, in an alternative embodiment of the invention, there is provided a closure for a polyethylene terephthalate container, said closure comprising a polymer and a compound effective to react with acetaldehyde under closure conditions in an amount ranging from 25 ppm to 2000 ppm, preferably 50 to 500 ppm. There is also provided a polyethylene terephthalate package comprising a polyethylene terephthalate container and a closure, said closure comprising a polymer and a compound effective to react with acetaldehyde under closure conditions in an amount ranging from 25 ppm to 2000 ppm, preferably 50 to 500 ppm.

Although not more than 2000 ppm of scavenger is needed to effectively reduce the amount of acetaldehyde in the vapor space to acceptable levels, more can be used if the polyethylene terephthalate is of particularly poor quality, or if no scavenger has been added to the container polymer to reduce as far a possible the level of acetaldehyde within the polymer itself, or, more commonly, if the liner material or the closure material itself generates acetaldehyde. For example, many liners used as oxygen barriers generate aldehydes such as acetaldehyde. While the above embodiment contemplates the use of liners or closure materials which do not generate appreciable amounts of acetaldehyde, thereby requiring only small amounts of scavenger to reduce the acetaldehyde in the vapor space, in another embodiment, there is also provided a liner or closure containing a scavenger in an amount as high as 50 wt%, but commonly not more than about 10 wt.%, and in many instances not more than about 5 wt.%, based on the weight of the closure polymer or the liner polymer, especially in applications requiring the use of oxygen barrier compounds or polymers which generate or contribute to the generation of acetaldehyde.

Many other ingredients can be added to the compositions of the present invention to enhance the performance properties of the blends. For example, impact modifiers, surface lubricants, denesting agents, stabilizers, antioxidants, ultraviolet light absorbing agents, metal deactivators, colorants, phosphate stabilizers, fillers, and the like, can be included herein. All of these additives and the use thereof are well known in the art and do not require extensive discussions. Therefore, only a limited number will be referred to, it being understood that any of these compounds can be used so long as they do not hinder the present invention from accomplishing its objectives.

Desirable additives also include impact modifiers and antioxidants. Examples of typical commercially available impact modifiers well-known in the art and useful in this invention include ethylene/propylene terpolymers, styrene based block copolymers, and various acrylic core/shell type impact modifiers. The impact modifiers may be used in conventional amounts from 0.1 to 25 weight percent of the overall composition and preferably in amounts from 0.1 to 10 weight percent of the composition. Examples of typical commercially available antioxidants useful in this invention include, but are not limited to, hindered phenols, phosphites, diphosphites, polyphosphites, and mixtures thereof. Combinations of aromatic and aliphatic phosphite compounds may also be included.

The invention will be further illustrated by a consideration of the following examples, which are intended to be exemplary of the invention. All parts and percentages in the examples are on a weight basis unless otherwise stated.

### Examples.

PET inherent viscosity (I.V.) was measured at 25°C using 0.50 grams of polymer per 100 ml of a solvent consisting of 60% by weight phenol and 40% by weight tetrachloroethane.

Number average molecular weights of the polyamides were determined by ebulliometry using hexafluoroisopropanol.

### Example 1: Screening to Identify Active Acetaldehyde Scavengers

Various compounds were screened using the following protocol to determine their potential scavenging activity for acetaldehyde.

PET having a 0.72 dL/g inherent viscosity as measured in a 60% phenol/40 % 1,1,2,2-tetrachloroethane solution (manufactured by Eastman Chemical Company) was dried for 8 hours at 60° C and 29 inches of mercury vacuum. The dried polymer was then extruded using a DACA 1/4" twin-screw extruder. The extruder's temperature was set at 300° C and the recirculation time within the extruder was three minutes. The extrudate was collected in a dewar-flask containing liquid nitrogen. The cold extrudate was then ground using a Wiley mill to produce a coarse grind. The ground material was screened and material which passed an 8-mesh screen but was retained on a 16-mesh screen was collected. Two grams of the screened PET was placed into a series of 20-ml headspace vials (Drachrom Catalog number DC-3120) which contained a pre-measured amount of the acetaldehyde scavenger being screened in an amount stated in Table 1. The vial was immediately capped with a standard septum cap (Drachrom Part No. DC-3127CAP) and placed into the sample feed carousel of a Hewlett Packard model 7694 Headspace sampler which was in turn connected to a Hewlett Packard Model 6890 gas chromatograph. The instrument was programmed to execute a variation of the industry standard French National Acetaldehyde generation test. In the utilized method the sample vials were heated to 150° C for sixty minutes to drive the AA from each sample into the vial's head-space. The vapor was then sampled and injected into the instrument's sample loop that was maintained at 160°C. Helium was used as the carrier gas.

Each sample was replicated at least once. A series of control samples, which contained only PET, was dispersed among the sample vials containing the various potential scavengers.

Typical results are shown below in Table 1.

**Table 1**

| **Additive** | **Loading (Weight of additive/10**^{**6**} **g of PET, ppm)** | **Level of Acetaldehyde (g AA/10**^{**6**} **g Sample ppm)** | **% Reduction vs. Control set** |
|---|---|---|---|
| Average result for 5 control samples | 0 | 5.1 | --- |
| Anthranilamide | 5000 | 1.3 | 74.23 |
| Anthranilamide | 23000 | 0.1 | 98.03 |
| 4 -Aminobenzoic Acid | 9500 | 3.6 | 28.40 |
| 4- Aminobenzoic Acid | 24000 | 3.7 | 27.81 |
| Activated Carbon | 6000 | 1.6 | 69.51 |
| Activated Carbon | 18000 | 0.3 | 94.69 |
| Anthranilic Acid | 9900 | 0.9 | 82.89 |
| Anthranilic Acid | 24000 | 0.5 | 89.77 |
| Aspartic Acid | 27000 | 5.12 | 0.00 |
| Aspartic Acid | 11000 | 5.14 | 0.00 |

### Example 2: Scavenging From Polyethylene Film

Ten grams of activated carbon pellets were added to ninety grams of polyethylene having an I.V. of about 0.935 and blended by tumbling or shaking the mixture. The resulting material is melt blended at 135° C or above in a single screw extruder equipped with a film dye. The resulting film, which can be of any suitable thickness, was subsequently cut into disks which are of a size to fit a standard headspace acetaldehyde GC vial. The vial was filled with 1 ml of a standard solution having a concentration of 1000g acetaldehyde per 1,000,000g of water, and allowed to sit undisturbed at room temperature for seven days. At the end of seven days the vapor space above the liquid is sampled via a gas-sampling syringe. Approximately 5 ml of gas was removed and injected into a 1-ml sample loop of a GC. The GC instrument used was an Alligent model 5890A gas chromatograph fitted with a gas sampling valve. The instrument's column was a Chrompack Poraplot Q. Detection was done with a flame ionization detector. The instrument's oven temperature was set to 145° C. Following sample injection the temperature was held at 145° for five minutes and then ramped up at 10° C/minute until the final temperature of 210°C was reached.

In addition to the polyethylene disks containing various scavengers, several "control" specimens are also prepared by inserting a disk prepared from extruded polyethylene containing no additive.

Table 2 below illustrates the relative scavenging effects of several of the compounds:

**Table 2**

| **Compound** | **Loading (Weight % of Additive in Polyethylene)** | **Headspace AA concentration (gAA/10**^{**6**} **g polymer, ppm) After 7 Days at Room Temperature** |
|---|---|---|
| Blank | 0 | 111 |
| Carbon | 0.2 wt % | 19 |
| Anthranilamide | 2.7 wt % | 6 |
| Anthranilic Acid | 2.8 wt % | 2 |
| Activated Carbon | 4.2 wt % | 0 |

## Claims

1. A closure for a polyethylene terephthalate container, said closure comprising a liner, said liner comprising a scavenging compound effective to capture or react with acetaldehyde under closure conditions comprising a polyoxyalkylene amine; a polyamidoamine; a polyamide; a polyesteramide; anthranilic acid; anthranilamide; salicyclamide; salicylanilide; o-phenylenediamine; 4-aminobenzoic acid; 3,4-diaminobenzoic acid; o-mercaptobenzamide; 4,5-dihydroxy-2,7-naphthalenedisulfonic acid; biuret; 2-amino-2-methyl-1,3-propanediol; aniline; 1-amino-2-indole; a thiol containing an active sulfur hydrogen atom; activated carbon; alumina; silica; amine functionalized silica; talc; zeolites; or a polyfunctional organic species containing both a primary, secondary or tertiary amine group and a carboxylic acid, phenolic, amide, ester, or thiol group, at least one of which is capable of reacting onto the backbone of the polymer and one of which is capable of reacting with acetaldehyde.

2. The closure of claim 1, wherein the closure comprises a scavenging compound in an amount ranging from 25 ppm to 10 wt.% based on the weight of the liner.

3. The closure of claim 2, wherein the closure comprises a scavenging compound in an amount ranging from 50 ppm to5 wt.%.

4. The closure of claim 3, wherein the closure comprises a scavenging compound in an amount ranging from 50 ppm to 2000 ppm.

5. The closure of claim 1, wherein the scavenger comprises a polyamidoamine; a polyamide; or a polyesteramide.

6. The closure of any one of claims 1 to 5, wherein the scavenger comprises a partially aromatic polyamide having a number average molecular weight of less than 13,000 or an aliphatic polyamide having a number average molecular weight of less than 7,000, or a combination thereof, each having a molecular weight suitable for film formation and an It.V. of 0.4 dUg or more.

7. The closure of claim 6, wherein the partially aromatic polyamide has an It.V. of less than 0.85 dUg, and the aliphatic polyamide has an It.V. of less than 1.15 dUg.

8. The closure of any one of claims 1 to 7, wherein the polyamide comprises poly(*m*-xylylene adipamide), poly(hexamethylene adipamide), poly(hexamethylene isophthalamide), poly(hexamethylene isophthalamide-co-terephthalamide), polycapramide (nylon 6), poly-ω-aminoheptanoic acid (nylon 7), poly-ω-aminononanoic acid (nylon 9), polyundecane-amide (nylon 11), polylaurylactam (nylon 12), polyethylene-adipamide (nylon 2,6), polytetramethylene-adipamide (nylon 4,6), polyhexamethylene-adipamide (nylon 6,6), polyhexamethylene-sebacamide (nylon 6,10), polyhexamethylene-dodecamide (nylon 6,12), polyoctamethylene-adipamide (nylon 8,6), polydecamethylene-adipamide (nylon 10,6), polydodecamethylene-adipamide (nylon 12,6) or polydodecamethylene-sebacamide (nylon 12,8).

9. The closure of any one of claims 1 to 5, wherein the scavenger compound comprises anthranilic acid; anthranilamide; salicyclamide; salicylanilide; 4-aminobenzoic acid; 3,4-diaminobenzoic acid; or activated carbon.

10. The closure of claim 1, wherein the scavenging compound comprises at least one of the compounds represented by the following formulas: 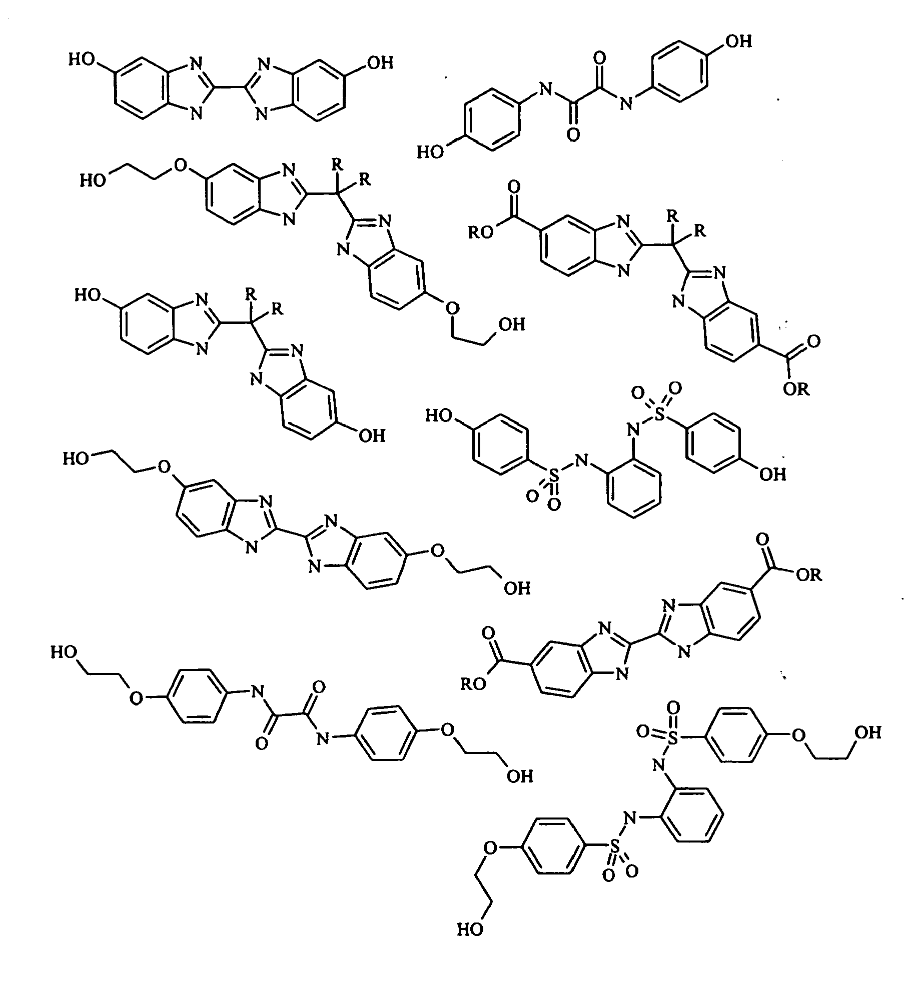 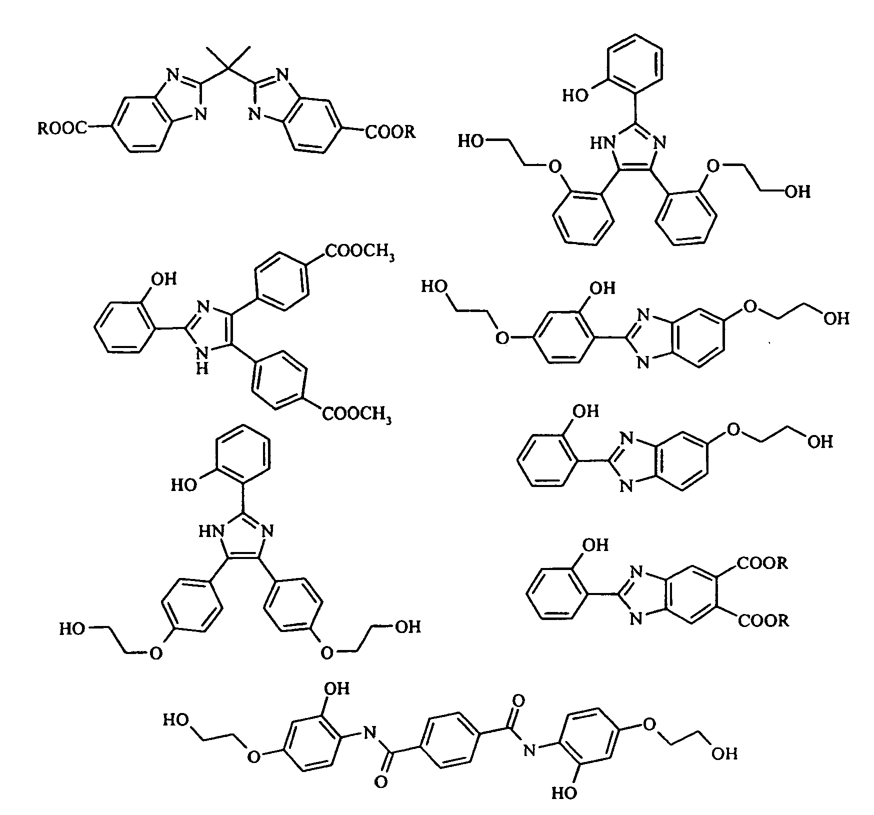 wherein R is independently an H, alkyl, aryl, substituted alkyl or heteroaryl group.

11. The closure of any one of claims 1 to 10, wherein the liner comprises a thermoplastic polymer comprising ethylene vinylacetate (EVA), polyvinyl chloride, polyurethane, polyethylene terephthalate, a polyolefin, or an (meth)acrylate compound.

12. The closure of any one of claims 1 to 11, wherein the closure comprises a threaded screw cap.

13. A threaded closure for a polyethylene terephthalate bottle, said closure comprising a polymer and a scavenger compound effective to capture or react with acetaldehyde under closure conditions.

14. The closure of claim 13, wherein the closure comprises a scavenging compound in an amount ranging from 50 ppm to 2000 ppm.

15. A threaded closure having an inner surface and a liner in direct contact with the inner surface, said liner comprising a polymer and a compound effective to capture or react with acetaldehyde under closure conditions.

16. The closure of claim 15, wherein the closure comprises a scavenging compound in an amount ranging from 50 ppm to 2000 ppm.

17. A package comprising a closure, a polyethylene terephthalate bottle containing a fluid, and a vapor space in contact with the closure and above the fluid, said closure comprising a compound effective to capture or react with acetaldehyde under closure conditions.

18. The package of claim 17, wherein the fluid is still or carbonated water.

19. The package of claim 17 or 18 comprising a closure according to any one of claims 1 to 16, wherein the amount of the scavenger ranges from 50 ppm to 2000 ppm based on the weight of the closure polymer.

20. A package comprising a closure, polyethylene terephthalate bottle containing a fluid, and a vapor space above the fluid, said closure comprising a liner having a vapor surface in direct contact with the vapor space, said liner comprising a polymer and a scavenger compound effective to capture or react with acetaldehyde under closure conditions.

21. The package of claim 20, wherein the fluid is water or still water.

22. The package of claim 20, wherein the scavenger compound is blended with the polymer, and the closure is a threaded cap.

23. The package of any one of claims 20 to 22 comprising a closure according to any one of claims 1 to 16.

24. A process for reducing acetaldehyde levels in a vapor space located between a threaded closure and contents contained within a polyethylene terephthalate container, comprising sealing the polyethylene terephthalate container with a closure either comprising a scavenger compound effective to capture or react with the acetaldehyde in the vapor space, or comprising a liner in direct contact with the closure and comprising a scavenger compound effective to capture or react with acetaldehyde in a vapor space.

25. The process of claim 24, wherein the container is a bottle.

26. The process of claim 24, wherein the scavenger compound is blended with the closure or with the liner.

27. A process for reducing acetaldehyde levels in a vapor space located between a closure sealed to a polyethylene terephthalate container and the contents contained within a polyethylene terephthalate container, comprising contacting a) a vapor comprising acetaldehyde in the vapor space with b) a closure comprising a compound effective for scavenging acetaldehyde, and continuously scavenging acetaldehyde from the vapor at a temperature less 50°C.

28. The process of claim 27, wherein the temperature is less than 40°C.

## Patentansprüche

1. Verschluss für einen Polyethylenterephthalat-Behälter, wobei der Verschluss eine Auskleidung umfasst, wobei die Auskleidung eine Abfängerverbindung umfasst, die wirksam ist, Acetaldehyd unter Verschlussbedingungen abzufangen oder damit zu reagieren und ein Polyoxyalkylenamin; ein Polyamidoamin; ein Polyamid; ein Polyesteramid; Anthranilsäure; Anthranilamid; Salicylamid; Salicylanilid; o-Phenylendiamin; 4-Aminobenzoesäure; 3,4-Diaminobenzoesäure; o-Mercaptobenzamid; 4,5-Dihydroxy-2,7-naphthalindisulfonsäure; Biuret; 2-Amino-2-methyl-1,3-propandiol; Anilin; 1-Amino-2-indol; ein Thiol, das ein aktives Schwefel-Wasserstoffatom enthält; aktivierten Kohlenstoff; Aluminiumoxid; Siliciumdioxid, Amin-funktionalisiertes Siliciumdioxid, Talkum; Zeolithe; oder eine polyfunktionelle organische Spezies umfasst, die sowohl eine primäre, sekundäre oder tertiäre Amingruppe als auch eine Carbonsäure-, phenolische, Amid-, Ester- oder Thiolgruppe enthält, von denen mindestens eine in der Lage ist, mit der Hauptkette des Polymers zu reagieren, und von denen eine in der Lage ist, mit Acetaldehyd zu reagieren.

2. Verschluss nach Anspruch 1, wobei der Verschluss eine Abfängerverbindung in einer Menge im Bereich von 25 ppm bis 10 Gew.-%, bezogen auf das Gewicht der Auskleidung, umfasst.

3. Verschluss nach Anspruch 2, wobei der Verschluss eine Abfängerverbindung in einer Menge im Bereich von 50 ppm bis 5 Gew.-% umfasst.

4. Verschluss nach Anspruch 3, wobei der Verschluss eine Abfängerverbindung in einer Menge im Bereich von 50 ppm bis 2000 ppm umfasst.

5. Verschluss nach Anspruch 1, wobei der Abfänger ein Polyamidoamin; ein Polyamid; oder ein Polyesteramid umfasst.

6. Verschluss nach irgendeinem der Ansprüche 1 bis 5, wobei der Abfänger ein partiell aromatisches Polyamid mit einem Zahlenmittel des Molekulargewichts von weniger als 13000 oder ein aliphatisches Polyamid mit einem Zahlenmittel des Molekulargewichts von weniger als 7000 oder eine Kombination derselben umfasst, von denen jedes ein Molekulargewicht, das für eine Filmbildung geeignet ist, und eine In.V. von 0,4 dl/g oder mehr aufweist.

7. Verschluss nach Anspruch 6, wobei das partiell aromatische Polyamid eine In.V. von weniger als 0,85 dl/g aufweist und das aliphatische Polyamid eine In.V. von weniger als 1,15 dl/g aufweist.

8. Verschluss nach irgendeinem der Ansprüche 1 bis 7, wobei das Polyamid Poly(m-xylylenadipamid), Poly(hexamethylenadipamid), Poly(hexamethylenisophthalamid), Poly(hexamethylenisophthalamid-co-terephthalamid), Polycapramid (Nylon 6), Poly-ω-aminoheptansäure (Nylon 7), Poly-ω-aminononansäure (Nylon 9), Polyundecanamid (Nylon 11), Polylauryllactam (Nylon 12), Polyethylenadipamid (Nylon 2,6), Polytetramethylenadipamid (Nylon 4,6), Polyhexamethylenadipamid (Nylon 6,6), Polyhexamethylensebacamid (Nylon 6,10), Polyhexamethylendodecamid (Nylon 6,12), Polyoctamethylenadipamid (Nylon 8,6), Polydecamethylenadipamid (Nylon 10,6), Polydodecamethylenadipamid (Nylon 12,6) oder Polydodecamethylensebacamid (Nylon 12,8) umfasst.

9. Verschluss nach irgendeinem der Ansprüche 1 bis 5, wobei die Abfängerverbindung Anthranilsäure, Anthranilamid, Salicylamid, Salicylanilid, 4-Aminobenzoesäure, 3,4-Diaminobenzoesäure oder aktivierten Kohlenstoff umfasst.

10. Verschluss nach Anspruch 1, in dem die Abfängerverbindung mindestens eine der Verbindungen umfasst, die durch die folgenden Formeln dargestellt werden: 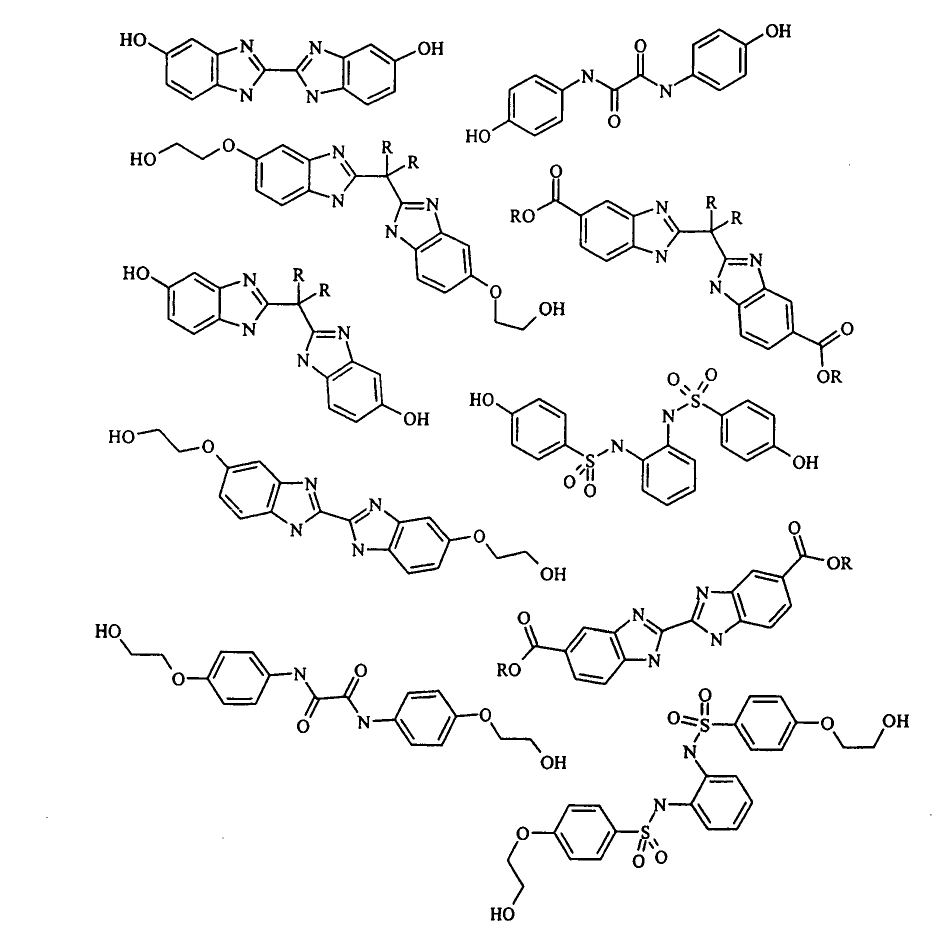 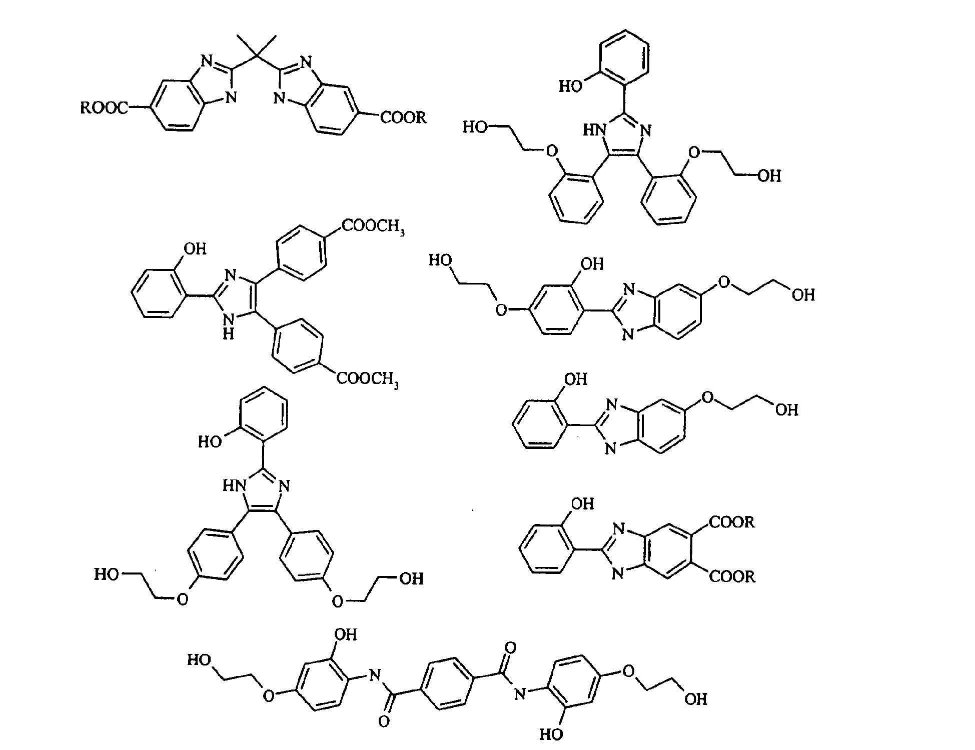 worin R unabhängig ein H, eine Alkyl-, Aryl-, substituierte Alkyl- oder Heteroarylgruppe ist.

11. Verschluss nach irgendeinem der Ansprüche 1 bis 10, wobei die Auskleidung ein thermoplastisches Polymer umfasst, das Ethylenvinylacetat (EVA), Polyvinylchlorid, Polyurethan, Polyethylenterephthalat, ein Polyolefin oder eine (Meth)acrylat-Verbindung umfasst.

12. Verschluss nach irgendeinem der Ansprüche 1 bis 11, wobei der Verschluss eine Gewindeschraubkappe umfasst.

13. Gewindeverschluss für eine Polyethylenterephthalat-Flasche, wobei der Verschluss ein Polymer und eine Abfängerverbindung umfasst, die wirksam ist, unter Verschlussbedingungen Acetaldehyd einzufangen oder damit zu reagieren.

14. Verschluss nach Anspruch 13, wobei der Verschluss eine Abfängerverbindung in einer Menge im Bereich von 50 ppm bis 2000 ppm umfasst.

15. Gewindeverschluss mit einer Innenoberfläche und einer Auskleidung im direkten Kontakt mit der Innenoberfläche, wobei die Auskleidung ein Polymer und eine Verbindung umfasst, die wirksam ist, unter Verschlussbedingungen Acetaldehyd einzufangen oder damit zu reagieren.

16. Verschluss nach Anspruch 15, in dem der Verschluss eine Abfängerverbindung in einer Menge im Bereich von 50 ppm bis 2000 ppm umfasst.

17. Paket, umfassend einen Verschluss, eine Polyethylenterephthalat-Flasche, die eine Flüssigkeit enthält, und einen Dampfraum in Kontakt mit dem Verschluss und über der Flüssigkeit, wobei der Verschluss eine Verbindung umfasst, die wirksam ist, unter Verschlussbedingungen Acetaldehyd einzufangen oder damit zu reagieren.

18. Paket nach Anspruch 17, in dem die Flüssigkeit stilles oder Kohlensäurehaltiges Wasser ist.

19. Paket nach Anspruch 17 oder 18, umfassend einen Verschluss nach irgendeinem der Ansprüche 1 bis 16, wobei die Menge des Abfängers im Bereich von 50 ppm bis 2000 ppm liegt, bezogen auf das Gewicht des Verschlusspolymers.

20. Verpackung, umfassend einen Verschluss, eine Polyethylenterephthalat-Flasche, die eine Flüssigkeit enthält, und einen Dampfraum über der Flüssigkeit, wobei der Verschluss eine Auskleidung mit einer Dampfoberfläche in direktem Kontakt mit dem Dampfraum umfasst, wobei die Auskleidung ein Polymer und eine Abfängerverbindung umfasst, die wirksam ist, unter Verschlussbedingungen Acetaldehyd einzufangen oder damit zu reagieren.

21. Verpackung nach Anspruch 20, in der die Flüssigkeit Wasser oder stilles Wasser ist.

22. Verpackung nach Anspruch 20, in der die Abfängerverbindung mit dem Polymer gemischt ist und der Verschluss eine Gewindekappe ist.

23. Verpackung nach irgendeinem der Ansprüche 20 bis 22, umfassend einen Verschluss nach irgendeinem der Ansprüche 1 bis 16.

24. Verfahren zur Verringerung der Acetaldehyd-Konzentrationen in einem Dampfraum, der zwischen einem Gewindeverschluss und einem Inhalt angeordnet ist, der innerhalb eines Polyethylenterephthalat-Behälters enthalten ist, umfassend das Verschließen des Polyethylenterephthalat-Behälters mit einem Verschluss, der entweder eine Abfängerverbindung, die wirksam ist, den Acetaldehyd in dem Dampfraum abzufangen oder damit zu reagieren, umfasst oder eine Auskleidung umfasst, die in direktem Kontakt mit dem Verschluss steht und eine Abfängerverbindung umfasst, die wirksam ist, Acetaldehyd in einem Dampfraum einzufangen oder damit zu reagieren.

25. Verfahren nach Anspruch 24, in dem der Behälter eine Flasche ist.

26. Verfahren nach Anspruch 24, in dem die Abfängerverbindung mit dem Verschluss oder mit der Auskleidung gemischt ist.

27. Verfahren zur Verringerung von Acetaldehyd-Konzentrationen in einem Dampfraum, der zwischen einem Verschluss, mit dem ein Polyethylenterephthalat-Behälter verschlossen ist, und dem Inhalt angeordnet ist, der innerhalb eines Polyethylenterephthalat-Behälters enthalten ist, umfassend: In-Kontakt-Bringen a) eines Dampfes, der Acetaldehyd umfasst, in dem Dampfraum mit b) einem Verschluss, der eine Verbindung umfasst, die wirksam ist, Acetaldehyd abzufangen, und kontinuierliches Abfangen von Acetaldehyd aus dem Dampf bei einer Temperatur von weniger als 50°C.

28. Verfahren nach Anspruch 27, in dem die Temperatur weniger als 40°C beträgt.

## Revendications

1. Fermeture pour un récipient en poly(téréphtalate d'éthylène), ladite fermeture comprenant une doublure, ladite doublure comprenant un composé épurateur efficace pour capturer ou réagir avec de l'acétaldéhyde dans des conditions fermées comprenant une polyoxyalkylèneamine ; une polyamidoamine ; un polyamide ; un polyesteramide ; de l'acide anthranilique ; de l'anthranilamide ; du salicylamide ; du salicylanilide ; de l'o-phénylènediamine ; de l'acide 4-aminobenzoïque ; de l'acide 3,4-diaminobenzoïque ; de l'o-mercaptobenzamide ; de l'acide 4,5-dihydroxy-2,7-naphtlaènesulfonique ; du biuret ; du 2-amino-2-méthyl-1,3-propanediol ; de l'aniline ; du 1-amino-2-indole ; un thiol contenant un atome de soufre-hydrogène actif ; du charbon activé ; de l'alumine ; de la silice ; de la silice à fonctions amine ; du talc ; des zéolites ; ou une espèce organique polyfonctionnelle contenant à la fois un groupe amine primaire, secondaire ou tertiaire et un groupe acide carboxylique, phénolique, amide, ester ou thiol, dont l'un au moins est capable de réagir avec la chaîne principale du polymère et dont l'un est capable de réagir avec l'acétaldéhyde.

2. Fermeture selon la revendication 1, dans laquelle la fermeture comprend un composé épurateur dans une quantité s'échelonnant de 25 ppm à 10 % en poids, par rapport au poids de la doublure.

3. Fermeture selon la revendication 2, dans laquelle le fermeture comprend un composé épurateur dans une quantité s'échelonnant de 50 ppm à 5 % en poids.

4. Fermeture selon la revendication 3, dans laquelle le fermeture comprend un composé épurateur dans une quantité s'échelonnant de 50 ppm à 2 000 ppm.

5. Fermeture selon la revendication 1, dans laquelle l'épurateur comprend une polyamidoamine ; un polyamide ; ou un polyesteramide.

6. Fermeture selon l'une quelconque des revendications 1 à 5, dans laquelle l'épurateur comprend un polyamide partiellement aromatique ayant une masse moléculaire moyenne en nombre inférieure à 13 000 ou un polyamide aliphatique ayant une masse moléculaire moyenne en nombre inférieure à 7 000, ou une combinaison de ceux-ci, chacun ayant une masse moléculaire convenant à la formation d'un film et un I.V. de 0,4 dl/g ou plus.

7. Fermeture selon la revendication 6, dans laquelle le polyamide partiellement aromatique a un I.V. inférieur à 0,85 dl/g et le polyamide aliphatique a un I.V. inférieur à 1,15 dl/g.

8. Fermeture selon l'une quelconque des revendications 1 à 7, dans laquelle le polyamide comprend le poly(*m*-xylylène adipamide), le poly(hexaméthylène adipamide), le poly(hexaméthylène isophtalamide), le copolymère poly(hexaméthylène isophtalamide)-poly(hexaméthylène téréphtalamidé), le polycapramide (nylon 6), le poly(acide ω-aminoheptanoïque) (nylon 7), le poly(acide ω-aminononanoïque) (nylon 9), le polyunécaneamide (nylon 11), le polylauryllactame (nylon 12), le polyéthylène adipamide (nylon 2,6), le polytétraméthylène adipamide (nylon 4,6), le polyhexaméthylène adipamide (nylon 6,6), le polyhexaméthylène sébacamide (nylon 6,10), le polyhexaméthylène dodécamide (nylon 6,12), le polyoctaméthylène adipamide (nylon 8,6), le polydécaméthylène adipamide (nylon 10,6), le polydodécaméthylène adipamide (nylon 12,6) ou le polydodécaméthylène sébacamide (nylon 12,8).

9. Fermeture selon l'une quelconque des revendications 1 à 5, dans laquelle le composé épurateur comprend de l'acide anthranilique ; de l'anthranilamide ; du salicylamide ; du salicylanilide ; de l'acide 4-aminobenzoïque ; de l'acide 3,4-diaminobenzoïque ; ou du charbon actif.

10. Fermeture selon la revendication 1, dans laquelle le composé épurateur comprend au moins un composé parmi ceux représentés par les formules suivantes : 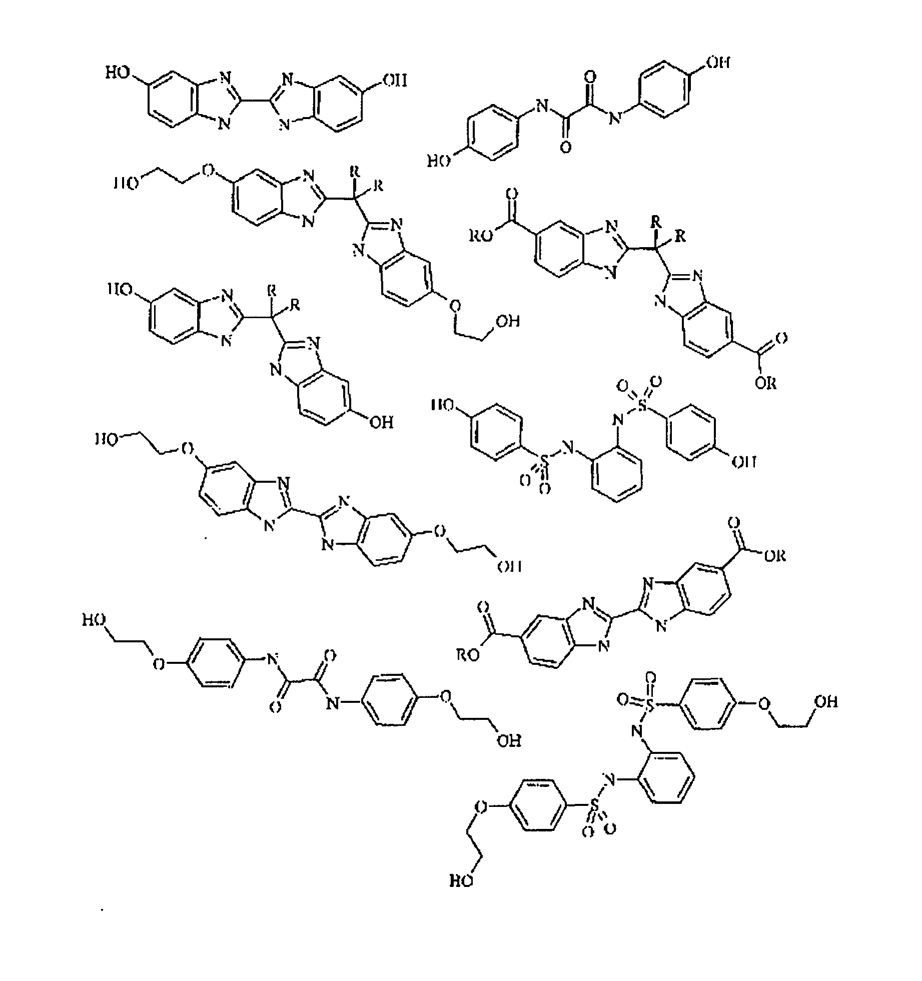 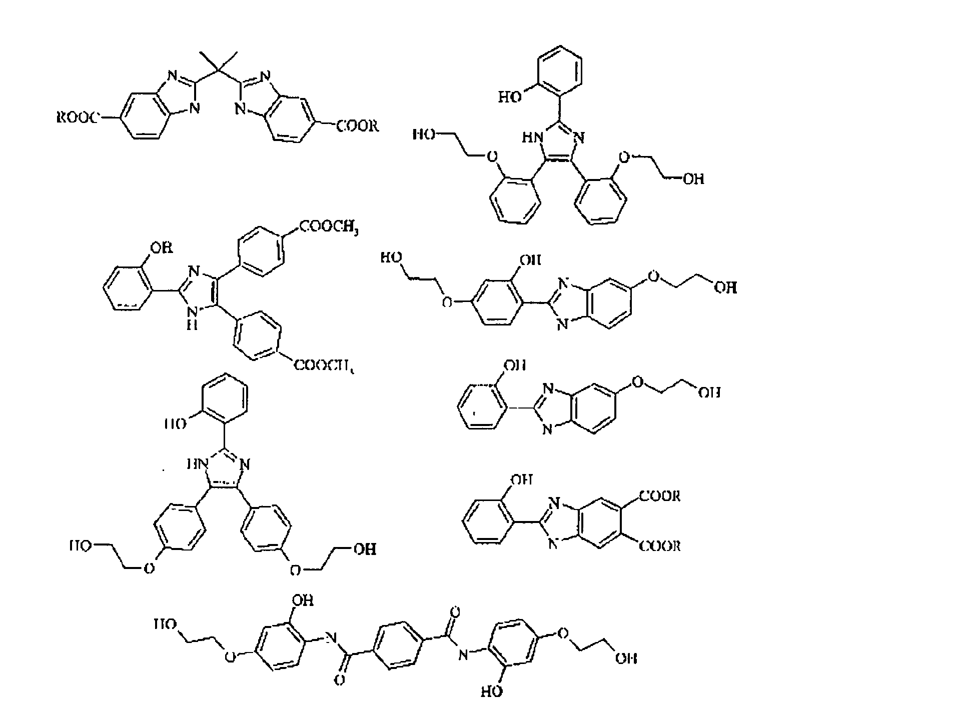 dans lesquelles R est indépendamment H, un groupe alkyle, aryle, alkyle substitué ou hétéroaryle.

11. Fermeture selon l'une quelconque des revendications 1 à 10, dans laquelle la doublure comprend un polymère thermoplastique comprenant un copolymère éthylène-acétate de vinyle (EVA), le poly(chlorure de vinyle), le polyuréthane, le poly(téréphtalate d'éthylène), une polyoléfine ou un composé (méth)acrylate.

12. Fermeture selon l'une quelconque des revendications 1 à 11, dans laquelle la fermeture comprend un bouchon à vis filetée.

13. Fermeture filetée pour une bouteille en poly(téréphtalate d'éthylène), ladite fermeture comprenant un polymère et un composé épurateur efficace pour capturer ou réagir avec l'acétaldéhyde dans des conditions fermées.

14. Fermeture selon la revendication 13, dans laquelle la fermeture comprend un composé épurateur dans une quantité s'échelonnant de 50 ppm à 2 000 ppm.

15. Fermeture filetée ayant une surface intérieure et une doublure en contact directe avec la surface intérieure, ladite doublure comprenant un polymère et un composé efficace pour capturer ou réagir avec l'acétaldéhyde dans des conditions fermées.

16. Fermeture selon la revendication 15, dans laquelle la fermeture comprend un composé épurateur dans une quantité s'échelonnant de 50 ppm à 2 000 ppm.

17. Emballage comprenant une fermeture, une bouteille en poly(téréphtalate d'éthylène) contenant un fluide, et un espace de vapeur en contact avec la fermeture et au-dessus du fluide, ladite fermeture comprenant un composé efficace pour capturer ou réagir avec l'acétaldéhyde dans des conditions fermées.

18. Emballage selon la revendication 17, dans lequel le fluide est de l'eau calme ou gazeuse.

19. Emballage selon la revendication 17 ou 18, comprenant une fermeture selon l'une quelconque des revendications 1 à 16, dans lequel la quantité du composé épurateur s'échelonne de 50 ppm à 2 000 ppm, par rapport au poids du polymère de la fermeture.

20. Emballage comprenant une fermeture, une bouteille en poly(téréphtalate d'éthylène) contenant un fluide, et un espace de vapeur au-dessus du fluide, ladite fermeture comprenant une doublure ayant une surface de vapeur en contact directe avec l'espace de vapeur, ladite doublure comprenant un polymère et un composé épurateur efficace pour capturer ou réagir avec l'acétaldéhyde dans des conditions fermées.

21. Emballage selon la revendication 20, dans lequel le fluide est de l'eau ou de l'eau calme.

22. Emballage selon la revendication 20, dans lequel le composé épurateur est mélangé avec le polymère et la fermeture est un bouchon fileté.

23. Emballage selon l'une quelconque des revendications 20 à 22, comprenant une fermeture selon l'une quelconque des revendications 1 à 16.

24. Procédé de réduction des teneurs en acétaldéhyde dans un espace de vapeur situé entre une fermeture filetée et le contenu à l'intérieur d'un récipient en poly(téréphtalate d'éthylène), comprenant la fermeture hermétique du récipient en poly(téréphtalate d'éthylène) avec une fermeture comprenant un composé épurateur efficace pour capturer ou réagir avec de l'acétaldéhyde dans l'espace de vapeur, ou comprenant une doublure en contact directe avec la fermeture et comprenant un composé épurateur efficace pour capturer ou réagir avec l'acétaldéhyde dans l'espace de vapeur.

25. Procédé selon la revendication 24, dans lequel le récipient est une bouteille.

26. Procédé selon la revendication 24, dans lequel le composé épurateur est mélangé avec la fermeture ou avec la doublure.

27. Procédé de réduction des teneurs en acétaldéhyde dans un espace de vapeur situé entre une fermeture fermée hermétiquement à un récipient en poly(téréphtalate d'éthylène), et le contenu à l'intérieur d'un récipient en poly(téréphtalate d'éthylène), comprenant la mise en contact a) d'une vapeur comprenant de l'acétaldéhyde dans l'espace de vapeur avec b) une fermeture comprenant un composé épurateur efficace pour épurer l'acétaldéhyde, et l'épuration en continu de l'acétaldéhyde de la vapeur à une température inférieure à 50 °C.

28. Procédé selon la revendication 27, dans lequel la température est inférieure à 40 °C.
